# EUROPEAN PATENT APPLICATION

(11) **EP 1 001 000 A1**
(43) Date of publication of application: **17.05.2000**
(21) Application number: 98830682.5
(22) Date of filing: 11.11.1998
(51) Int. Cl.: C09K 21/02, E04B 1/94, C04B 28/00

(54) **Fire protection for buildings and other civil engineering constructions**

(71) Applicant: Thermal Ceramics Italiana S.R.L., 20071 Casalpusterlengo (LO) (IT)
(72) Inventor: Magni, Ermanno, 20071 Casalpusterlengo (LO) (IT)
(74) Representative: Checcacci, Giorgio

(57) **Abstract**

Fire protection is provided by a coating made from an unfired slurry capable of originating a refractory material upon firing. The protection layer obtained is both very effective and cheap, suitable even for such demanding applications as submarine tunnels.

## Description

### Field of the invention

The present invention relates to fire protection for buildings and other civil engineering constructions. The invention, in particular, is useful to protect either concrete, or iron, or steel or reinforced concrete structures such as for example tunnels.

### Background of the invention

Civil engineering constructions are increasingly required to have fire protection, i.e. to be able to withstand without damage the stresses due to a fire occurring in the immediate surrounding of the structure. In fact, in many cases such stresses may lead to permanent damage of the structure, if not directly to its collapse. Consequently, provision of adequate fire protection is a major issue in the construction of structures that are both potentially subject to severe fires and would cause very serious problems in the event of collapse. Typical examples are tunnels (for both roads and railways), particularly submarine tunnels, where the potential fire load is extremely high because it depends upon the maximum quantity of inflammable materials carried by the vehicles travelling in the tunnel; the seriousness of the consequences of a collapse is self evident. The recent fire in the Channel Tunnel also showed that even quite small quantities of inflammable materials on a moving vehicle can cause major damage to tunnels; the passage of a vehicle through the tunnel provides large quantities of air to the fire.

At present, fire protection in tunnels is achieved by securing fire resistant panels to the walls; panels are made of refractory materials and are secured by bolting. The protection achieved is normally considered sufficient, but the assembly operations are difficult (panels are heavy) and time consuming; all this makes the protection very expensive, and hence not used as often as desirable.

The problem of providing effective fire protection for civil engineering structures and having sufficiently low cost so as to be usable on a large scale has still not been solved.

### Summary of the invention

Therefore, the present invention relates, in a first aspect, to a process for providing fire protection to a civil engineering construction, characterized in that it comprises the following steps:
- preparation of a slurry capable of originating a refractory material upon firing;
- coating a layer of the unfired slurry onto the construction.

The basic idea of this solution is that of using the thermal energy of a fire to build up effective fire protection. This has many advantages.

First, the refractory material formed from the slurry is cheaper than conventional pre-fired refractory materials, since it need not be subject to an expensive firing process.

Second, it is not necessary to mold the material into specific shapes (panels, bricks or whatever); thus, the material can be provided as a dry mixture, to be transformed into a slurry by addition of water and shaped in place, by coating it onto the construction to be protected. This makes both application easier and fire protection more effective, because there are no discontinuities in the protecting layer, unlike in the joints between conventional bricks or panels.

Third, and maybe most important, in the event of a fire the material is capable of absorbing a great amount of thermal energy for its own transformation into a refractory material. This advantage is obviously more significant for the first occurring fire, but can be easily restored by placing a further fresh layer after the fire, only in the region affected by the fire. If this restoration is not performed, the capability of absorbing more thermal energy is not exhausted, but depends on the thickness of the layer and the duration and strength of the previous fires. In any case, fire is not a common occurrence and thus the restoration process would not considerably affect much greater overall construction costs.

In summary, the invention is able to provide more effective fire protection at a lower cost than available systems.

The coating step may be performed in different ways; preferably, the coating step includes spray coating. This technique ensures uniform coating and shorter application times. Spray coating may be obtained by means of a machine of the type used for plasters, such as that known as DUOMIX available from MTEC or that known as M200 available from MAI Pump International.

Preferably, the process further comprises the step of drying the layer, either by waiting for a preset time, sufficient for the layer to dry spontaneously, or by suitable drying techniques, depending on the location of the construction and possibly on weather conditions. The dried layer is preferred because it can be treated as a normal plastered wall: it can be even painted, if desired.

In order to improve the mechanical stability of the layer, it may be preferred to include, before the step of coating, the step of providing anchoring means, projecting from the construction, to be embedded in the layer during the coating step. Suitable anchoring means may be for example bolts or other projecting fittings, or a metal net, fixed to the construction.

The above process is suitable for many kinds of constructions. For example, the construction may include a concrete structure and/or a reinforced concrete structure and/or a steel or iron structure. In particular, the process is effective when the construction is a very demanding one, such as a tunnel or a portion of a tunnel. However, due to the simplicity of the invention and to its low cost, the construction may be also a less demanding one, for which at present fire protection is not even considered.

In a second aspect, the invention relates to the use of a slurry capable of originating a refractory material upon firing as fire protection for a civil engineering construction, the slurry being used in unfired condition.

Such a slurry can be obtained by adding water to a mixture that is available and used in the manufacturing industry of refractory material. Ordinarily the mixture is used to shape panels and bricks that are then fired to manufacture the desired refractory articles.

Preferably, the slurry comprises a material that is fugitive on exposure to fire creating escape ways for the gases generated by the firing of the slurry. One such particularly useful material is saw dust. The saw dust is capable of absorbing a great amount of water, typically around 2.5 times its own weight. During a fire, this water evaporates absorbing a great amount of heat; then, the saw dust burns, leaving free spaces that can serve as escape ways for the gases generated by the firing of the slurry. This ensures the setting up of an homogeneous refractory layer. The invention is not limited to the fugitive material being one which burns and materials that melt or evaporate are also contemplated.

To improve adhesion properties, particularly important when the slurry is to be applied by spray coating, the slurry may comprise a cement. Aluminous cement is preferred, for its refractory properties, but portland cement may be usefully added as well.

In a third aspect, the invention relates to a mixture for preparing fire protection for a civil engineering construction, characterized by being capable of originating a refractory material upon adding water and firing, and by comprising saw dust and a cement.

A preferred composition of the mixture comprises kaolin, chalk, powdered isolating refractory brick, refractory filler, sawdust, aluminous cement and possibly portland cement. A preferred refractory filler is alumina hydrate. A preferred saw dust is that classified as grade "C"; it is derived from light wood, is needle shaped, and has dimension less than 2 mm and apparent specific weight lower than 180 kg/m³. A preferred powdered isolating refractory brick is an ASTM grade 23 or higher; this powder is normally available as a by-product of the manufacturing of refractory bricks.

In more detail, a preferred composition of the mixture comprises, in weight percentage:

| | |
|---|---|
| kaolin | 25 - 35 |
| chalk | 10 - 23 |
| ASTM grade 23 powdered isolating refractory brick | 5 - 10 |
| "C" grade saw dust | 3 - 8 |
| alumina hydrate | 12 - 20 |
| aluminous cement | 5 - 18 |
| portland cement | 0 - 20 |

Kaolin for this purpose is intended as a clay having more than 35% Al₂O₃, less than 1% iron, less than 2.2% Na₂O + K₂O + CaO, with about 50% by weight having grain dimension less than 2 µm.

The components should preferably be intimately mixed. A preferred mixing sequence provides first for a thorough mixing of kaolin and saw dust, followed by addition and mixing of chalk, powdered brick and alumina hydrate; finally, cements are added and mixed.

In a fourth aspect, the present invention relates to fire protection for a civil engineering construction, comprising a layer made either of an unfired slurry obtained by adding water to a mixture according to the third aspect of the invention or by a process according to the first aspect of the invention.

From practical considerations, fire protection for the most severe anti-fire applications (submarine tunnels) is deemed acceptable when a protected wall can resist a firing cycle of two hours, including a first phase when temperature rises from room temperature to over 1000°C in few minutes, a middle phase when temperature continues to rise for about an hour up to 1350°C and a final phase when temperature slowly decreases to about 1200°C over the next hour; resisting means that, over the whole two hours test, the temperature of the surface of the wall protected by the anti-fire layer never exceeds 380°C (at 400°C concrete is permanently deformed) and the temperature of an iron rod positioned within the wall and 25 mm from the inner surface of the protected wall never exceeds 250°C (at higher temperature the thermal expansion of the iron bar can cause separation of the iron bar from the concrete).

In view of that, two examples were made and tested according to the following.

### Detailed description of two examples of the invention

A mixture was prepared by mixing together the following components (amounts in weight percent):

| | |
|---|---|
| kaolin | 29.6 |
| chalk | 13.6 |
| ASTM grade 23 powdered isolating refractory brick | 6.0 |
| "C" grade saw dust | 5.4 |
| alumina hydrate | 17.0 |
| aluminous cement | 14.2 |
| portland cement | 14.2 |

First, kaolin and saw dust were mixed thoroughly; then chalk, powdered brick, and alumina hydrate were added and mixed as well. Finally, aluminous cement and portland cement were added and mixed.

Two concrete test walls were prepared, 500 mm wide, 500 mm high and 150 mm thick, embedding an iron rod (diameter 12 mm) placed vertically and parallel to a first surface of the wall, at 25 mm therefrom. Thermocouples were positioned on the first surface of the walls and on the iron rod. In particular, thermocouple 1 was placed on the surface, in an upper region thereof, thermocouple 2 was placed on the iron rod in an upper region thereof, thermocouple 3 was placed on the surface, in a lower region thereof, thermocouple 4 was placed on the iron rod in a lower region thereof.

A slurry was then prepared by adding water to the mixture, in an amount of about 47% by weight.

The first surface of the wall was then spray coated with a layer of the slurry; the thickness of the layer was 30 mm in Example 1, 50 mm in Example 2.

The layered walls were left 24 hours to ensure good adhesion of the layers, then were dried in an oven at 110 °C; oven drying was 24 hours long for Example 1, 48 hours long for Example 2.

The resulting layered walls were then tested to verify the anti-fire properties of the layers.

Therefore, the walls of Examples 1 and 2 were placed on a door of a furnace of a type suitable to test thermal shock. This furnace has an opening closed by a slidable two-door assembly: in a first normal position the furnace is closed by a first door made of (or lined with) refractory material having the same characteristics as the refractory material of the internal walls of the furnace; in a second test position, the furnace is closed by a second door made of (or lined with) the test material. The furnace is brought to the desired test temperature with the door assembly in its normal position; in this phase, the test material on the second door is outside the furnace, and its temperature is the room temperature. When the furnace has reached the desired test temperature, the door assembly is quickly slid into its test position, so that the second door with the test material is suddenly placed in front of the opening of the furnace, thus being exposed to the test temperature. The test temperature may also be altered during the test phase, if desired.

For testing their behaviour under fire, the walls of examples 1 and 2 were mounted (separately one at a time) on the slidable door of the test furnace. The furnace was pre-heated to about 1050°C, with the door in the normal position. Then, the door was slid into the test position; the temperature of the furnace was then increased as much as possible. A thermocouple 5 measured the temperature in the furnace during the test.

Temperatures were recorded every 30 minutes, giving the results summarized in Table I for Example 1 and in Table II for Example 2. "TC #" indicates the temperature measured by the thermocouple #.

**TABLE I**

| **Example 1** | | | | | |
|---|---|---|---|---|---|
| time min | TC 1 °C | TC 2 °C | TC 3 °C | TC 4 °C | TC 5 °C |
| 0 | 31.8 | 30.2 | 29.7 | 29.6 | 1050 |
| 30 | 102.6 | 66.8 | 102.0 | 64.4 | 1150 |
| 60 | 178.0 | 97.0 | 167.0 | 93.6 | 1240 |
| 90 | 270.0 | 130.8 | 253.0 | 124.3 | 1280 |
| 120 | 360.2 | 198.2 | 330.3 | 183.6 | 1350 |

**TABLE II**

| **Example 2** | | | | | |
|---|---|---|---|---|---|
| time min | TC 1 °C | TC 2 °C | TC 3 °C | TC 4 °C | TC 5 °C |
| 0 | 27.8 | 27.3 | 26.5 | 26.5 | 1050 |
| 30 | 67.4 | 43.2 | 69.0 | 43.5 | 1170 |
| 60 | 89.5 | 64.8 | 90.8 | 65.5 | 1240 |
| 90 | 100.7 | 81.7 | 101.9 | 82.7 | 1310 |
| 120 | 111.0 | 94.2 | 130.7 | 95.8 | 1350 |
| 150 | 171.0 | 106.0 | 181.5 | 108.0 | 1380 |

It can be seen that test walls of both Examples 1 and 2 fulfilled the most severe anti-fire requirements. Example 2 even exhibited a behaviour far better than required, being able to keep the temperatures well below the limits, and for a much longer time. This demonstrated that the invention is not only able to fulfil the most severe requirements now provided, but can even achieve extraordinary high performances.

The test walls were also carefully examined after the tests. In both Examples, the surface exposed to the fire had a darker colour and was evidently vitrified. It was cracked according to a cobweb pattern, but the cracks had very limited width and depth. Having sectioned the test walls, it was possible to verify that the depth of the cracks did not exceeded 50% of the thickness of the anti-fire layer. It was also possible to verify that, mainly for the test wall of Example 2 but also for that of Example 1, the material of the anti-fire layer had been transformed only partially, a substantial thickness of it being still untransformed. For this reason and because the test walls after firing had the appearance of a good refractory item, it is believed that the anti-fire protection of the invention can withstand a fire more than once.

## Claims

1. Process for providing fire protection to a civil engineering construction, characterized in that it comprises the following steps:
- preparation of a slurry capable of originating a refractory material upon firing;
- coating a layer of the unfired slurry onto the construction.

2. Process according to claim 1, wherein the coating step includes spray coating.

3. Process according to any claim 1 or 2, further comprising the step of drying the layer.

4. Process according to claim 3, wherein the drying step includes waiting for a preset time, sufficient for the layer to dry spontaneously.

5. Process according to any of claims 1 to 4, further comprising, before the step of coating, the step of providing anchoring means, projecting from the construction, to be embedded in the layer during the coating step.

6. Process according to any of claims 1 to 5, wherein the construction includes a concrete structure and/or a reinforced concrete structure and/or a steel structure.

7. Process according to claim 6, wherein the construction is a portion of a tunnel.

8. Process according to any of claims 1 to 7, wherein the slurry comprises a material that is fugitive on exposure to fire creating escape ways for the gases generated by the firing of the slurry.

9. Process according to claim 8 wherein the material that is fugitive on exposure to fire comprises saw dust.

10. Process according to claim 9, wherein the saw dust is grade "C".

11. Process according to claim 9 or claim 10, wherein the saw dust is from light wood, is needle shaped, and has dimension lower than 2 mm and apparent specific weight lower than 180 kg/m³.

12. Process according to any preceding claim, wherein the slurry comprises a cement.

13. Process according to claim 12, wherein the slurry comprises portland cement.

14. Process according to claim 12, wherein the slurry comprises aluminous cement

15. Process according to any preceding claim, wherein the slurry comprises kaolin, chalk, powdered isolating refractory brick, refractory filler, aluminous cement, saw dust and water.

16. Process according to claim 15, wherein the refractory filler is alumina hydrate.

17. Process according to claim 15, wherein the powdered isolating refractory brick is an ASTM grade 23 or higher.

18. Process according to any of claims 15 to 17, wherein the slurry comprises water and a mixture of, in weight percentage:
| | |
|---|---|
| kaolin | 25 - 35 |
| chalk | 10 - 23 |
| ASTM grade 23 powdered isolating refractory brick | 5 - 10 |
| "C" grade saw dust | 3 - 8 |
| alumina hydrate | 12 - 20 |
| aluminous cement | 5 - 18 |
| portland cement | 0 - 20. |

19. Use of a slurry capable of originating a refractory material upon firing as fire protection for a civil engineering construction, the slurry being used in unfired condition and as described in any preceding claim.

20. Mixture for preparing fire protection for a civil engineering construction, characterized by being capable of originating a refractory material upon adding of water and firing, and by comprising a material as described in any of claims 8 to 18.

21. Fire protection for a civil engineering construction, comprising a layer made of an unfired slurry obtained by adding water to a mixture according to claim 20.

22. Fire protection for a civil engineering construction, comprising a layer made by a process according to any of claims 1 to 18.

23. An article for protecting a civil engineering construction from fire, the article being made of an unfired slurry obtained by adding water to a mixture according to claim 20.

24. A civil engineering construction comprising fire protection in the form of a layer made of an unfired slurry obtained by adding water to a mixture according to claim 20.

25. A civil engineering construction as claimed in claim 24 in which the civil engineering construction is a tunnel.
